# FASCICULE DE BREVET EUROPEEN

(11) **EP 2 868 519 B1**
(45) Date de publication et mention de la délivrance du brevet: **04.11.2015**
(21) Numéro de dépôt: 14190922.6
(22) Date de dépôt: 29.10.2014
(51) Int. Cl.: B60N 2/42, B60N 2/30

(54) **Siège escamotable anti déversement**
Versenkbarer Sitz mit Kippsicherung
Stowable anti-spill seat

(30) Priorité: 30.10.2013 FR 1360642
(43) Date de publication de la demande: 06.05.2015
(73) Titulaire: GRUPO ANTOLIN-INGENIERIA, S.A., 09080 Burgos (ES)
(72) Inventeur: Hamtache, Nordine, 42700 Firminy (FR)
(74) Mandataire: Delorme, Nicolas

(56) Documents cités:
- EP-A1- 2 298 593
- WO-A1-02/34563
- DE-A1-102005 060 218
- DE-U1-202007 009 795

## Description

La présente invention concerne un siège escamotable pour véhicule, et un véhicule, notamment un véhicule automobile, comprenant ce siège.

Les sièges escamotables (voir EP-A-2 298 593) comprennent traditionnellement un dossier et une assise articulée par rapport au dossier, le dossier et l'assise pouvant être déplacés entre une position nominale dans laquelle le dossier et l'assise sont aptes à recevoir un passager et une position escamotée dans laquelle le dossier est rabattu contre l'assise pour dégager un espace de chargement.

Ces sièges peuvent comprendre deux flasques de soubassement pouvant être solidarisés au plancher d'un véhicule, et pouvant être reliés au dossier par l'intermédiaire d'une liaison pivot.

Un pédoncule pour ceinture de sécurité peut être relié à l'un des flasques de soubassement.

Cependant, du fait de cette configuration, les flasques de soubassement peuvent subir des contraintes asymétriques particulièrement importantes lors d'un freinage brusque. Cette asymétrie de contraintes peut provoquer un déversement, ou gauchissement, des flasques de soubassement.

Dans le contexte actuel de réduction des émissions de gaz à effet de serre, comme le dioxyde de carbone, une attention particulière est par ailleurs portée à la masse des véhicules, donc à celle de leurs équipements, cette masse devant être la plus faible possible.

Une attention particulière est également portée à la compacité et aux capacités de rangement et/ou chargement dans l'habitacle des véhicules.

Aussi la présente invention vise à pallier tout ou partie de ces inconvénients en proposant un siège pour véhicule empêchant le déversement des flasques et offrant donc une robustesse améliorée, tout en présentant un encombrement et une masse limités.

A cet effet, la présente invention a pour objet un siège escamotable pour véhicule, notamment véhicule automobile, comprenant un dossier, une assise articulée par rapport au dossier par l'intermédiaire d'une première liaison pivot, un ensemble de soubassement pouvant être fixé au plancher d'un véhicule, l'ensemble de soubassement comprenant deux flasques latéraux reliés au dossier par une deuxième liaison pivot, et au moins une bielle avant reliée à l'assise par une troisième liaison pivot et à l'ensemble de soubassement par une quatrième liaison pivot, en vue de déplacer le siège entre une position nominale dans laquelle le dossier et l'assise sont destinés à recevoir un passager et une position escamotée dans laquelle le dossier est rabattu contre l'assise pour dégager un espace de chargement, le siège comprenant en outre des moyens de contreventement destinés à s'opposer au déversement des deux flasques latéraux de l'ensemble de soubassement lorsque le siège est dans la position nominale, les moyens de contreventement comprenant deux paires de surfaces fonctionnelles de blocage, chaque paire comprenant une première surface fonctionnelle de blocage s'étendant depuis un élément d'assise et une deuxième surface fonctionnelle de blocage s'étendant depuis un élément de flasque latéral de l'ensemble de soubassement, la première surface fonctionnelle et la deuxième surface fonctionnelle étant agencées relativement l'une par rapport à l'autre pour se superposer lorsque le siège est dans la position nominale.

Le siège selon l'invention offre donc, du fait de son caractère escamotable, un encombrement restreint et, du fait du contreventement des flasques lorsque le siège est dans la position, nominale, une plus grande robustesse.

Les moyens de contreventement établissent en effet une liaison rigide entre les deux flasques, qui sont couplés transversalement.

Ainsi, les efforts transversaux subis par les flasques lors d'un freinage d'urgence sont transmis via les moyens de contreventement d'un côté à l'autre de l'ensemble de soubassement, d'un flasque à l'autre, si bien que ces efforts peuvent se compenser, ce qui évite le déversement des flasques.

La superposition des surfaces fonctionnelles solidarise, selon la direction transversale, l'assise et les deux flasques. C'est donc avantageusement l'assise qui effectue le contreventement entre les flasques et qui fait office de liaison rigide entre ces flasques.

Autrement dit, il est important de souligner que c'est l'assise qui effectue le contreventement des deux flasques. L'assise étant déjà un composant du siège, ce dernier peut donc être avantageusement exempt d'un composant supplémentaire, comme une barre de contreventement qui relierait directement les deux flasques.

La réalisation d'un contreventement sans pièce mécanique additionnelle permet de limiter sensiblement la masse du siège et l'encombrement, l'espace sous l'assise restant accessible.

On notera le cas échéant que par position nominale il faut entendre l'une quelconque des positions nominales possibles dans la plage de réglage offerte par le siège. Ainsi, la première surface fonctionnelle et la deuxième surface fonctionnelle sont agencées relativement l'une par rapport à l'autre pour se superposer lorsque le siège est dans la position nominale et dans cette plage de réglage.

De manière avantageuse, l'une des surfaces fonctionnelles, parmi la première surface fonctionnelle et la deuxième surface fonctionnelle, est délimitée par un retour formé à une extrémité distale d'un axe, l'autre des surfaces fonctionnelles, parmi la première surface fonctionnelle et la deuxième surface fonctionnelle, étant formée sur deux bras de guidage longitudinaux sensiblement parallèles entre lesquels est destiné à coulisser l'axe et contre lesquels est destiné à prendre appui le retour lorsque le siège est position nominale, les bras de guidage s'étendant parallèlement à la trajectoire décrite par l'axe lorsque le siège est déplacé de la position nominale à la position escamotée.

La forme des bras de guidage, longitudinaux, et épousant la trajectoire de l'axe, permet ainsi aux surfaces fonctionnelles de se déplacer l'une par rapport à l'autre tout en restant en appui l'une contre l'autre tant que le siège est dans l'une de ses positions nominales possibles. Cela permet de conserver le bénéfice du contreventement pour plusieurs positions nominales possibles du siège, c'est-à-dire pour plusieurs réglages possibles de l'inclinaison du dossier par rapport à l'assise.

Selon une possibilité avantageuse, le siège comprend une pluralité de pattes de fixation pour fixer les bras de guidage au flasque correspondant, ou le cas échéant à l'assise, les pattes de fixation étant agencées les unes par rapport aux autres de manière à former un polygone au centre duquel est destiné à être agencé le retour de l'axe lorsque le siège est dans la position nominale.

Ainsi, le siège offre une plus grande robustesse.

Selon un mode de réalisation préféré, la première surface fonctionnelle est délimitée par le retour de l'axe et la deuxième surface fonctionnelle est formée par les deux bras de guidage.

Cet agencement présente l'avantage d'offrir un encombrement moindre qu'un agencement inverse qui correspondrait à une première surface fonctionnelle formée par les deux bras de guidage et une deuxième surface fonctionnelle délimitée par le retour de l'axe. Autrement dit, l'axe correspond à l'élément d'assise tandis que les branches de guidage correspondent à l'élément de flasque.

En effet, l'assise est destinée à être mobile par rapport au véhicule, pas le flasque, si bien qu'il est nécessaire de prévoir un espace pour le déplacement de l'élément d'assise. L'axe étant moins encombrant que les bras de guidage, il est plus avantageux de le rattacher à l'assise plutôt que les bras de guidage.

Avantageusement, les bras de guidage sont décalés transversalement par rapport au flasque, auquel ils sont rattachés, de sorte que le retour de l'axe est agencé entre le flasque et les bras de guidage lorsque le siège est dans la position nominale.

Ainsi, le siège selon l'invention offre une compacité améliorée.

Selon un mode de réalisation avantageux, l'assise comprend deux bras latéraux sensiblement parallèles, les bras de guidage comprennent une surface fonctionnelle d'appui opposée à la deuxième surface fonctionnelle et destinée à venir en appui contre l'un des deux bras latéraux lorsque le siège est dans la position nominale.

Ainsi, quelque soit le sens des efforts transversaux subis par les flasques, ces efforts sont repris par l'assise et transmis par l'assise à l'autre flasque.

Selon un mode de réalisation avantageux, l'assise comprend deux bras latéraux sensiblement parallèles, et les moyens de contreventement comprennent un tube de liaison s'étendant de façon sensiblement transversale entre les deux bras latéraux.

Ainsi, le contreventement est renforcé, le siège offre une robustesse améliorée.

Selon un mode de réalisation avantageux, l'un au moins des deux flasques de l'ensemble de soubassement comprend un rebord courbé.

Ainsi, cela permet de rigidifier le flasque dont le rebord est courbé pour empêcher son déversement.

Selon un autre aspect, l'invention a également pour objet un véhicule, notamment véhicule automobile, comprenant un siège escamotable ayant les caractéristiques précitées.

Ce véhicule offre des sièges avec une robustesse améliorée, ainsi qu'une compacité élevée optimisant l'espace disponible à l'intérieur de l'habitacle, tout en étant de masse contenue.

D'autres caractéristiques et avantages ressortiront clairement de la description ci-après d'un mode de réalisation de la présente invention, donné à titre d'exemple non limitatif, en référence aux dessins annexés dans lesquels :
- La figure 1 est une vue en perspective d'un siège selon un mode de réalisation de l'invention,
- La figure 2 est une vue en perspective d'un flasque de l'ensemble de soubassement et d'une partie de l'assise d'un siège selon un mode de réalisation de l'invention,
- La figure 3 est une vue en perspective de devant d'une partie d'un siège selon un mode de réalisation de l'invention.

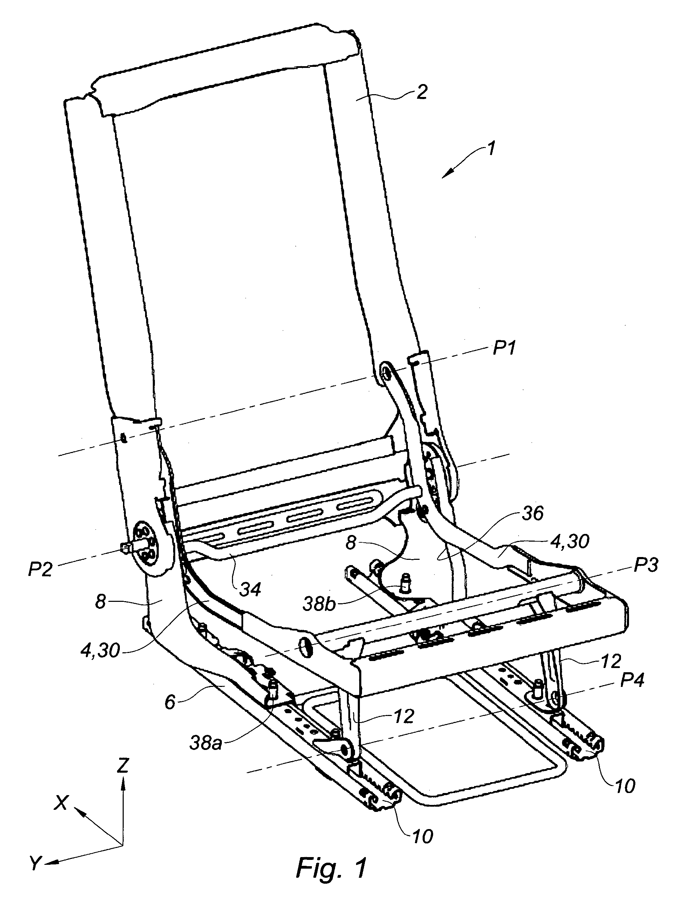

La figure 1 montre un siège 1 escamotable selon un mode de réalisation de l'invention. Le siège 1 est destiné à équiper un véhicule, notamment un véhicule automobile.

On notera que par siège on entend siège ou banquette, pouvant donc présenter une ou plusieurs places.

Certains véhicules automobiles peuvent comprendre un ou plusieurs sièges situés en rang 2, c'est-à-dire un rang derrière le siège conducteur, et/ou en rang 3, c'est-à-dire un rang derrière le ou les sièges de rang 2. Le siège 1 peut correspondre par exemple à un siège de rang 1, de rang 2, ou de rang 3.

On précise également que la description est réalisée par rapport à un référentiel cartésien lié à un véhicule automobile, l'axe X étant orienté dans la direction longitudinale du véhicule, l'axe Y étant orienté dans la direction transversale du véhicule et l'axe Z étant orienté dans la direction verticale du véhicule. Les orientations, directions et déplacements longitudinaux, transversaux, verticaux, avant, arrière sont ainsi définis par rapport à ce référentiel.

Comme on peut le voir sur la figure 1, le siège 1 comprend un dossier 2, une assise 4 articulée par rapport au dossier 2 par l'intermédiaire d'une première liaison pivot P1, d'axe transversal, un ensemble 6 de soubassement pouvant être fixé au plancher d'un véhicule.

L'ensemble 6 de soubassement comprend deux flasques 8 latéraux reliés au dossier 2 par une deuxième liaison pivot P2, d'axe transversal. A titre d'exemple, les flasques 8 de soubassement peuvent être formés par une tôle métallique emboutie.

L'ensemble 6 de soubassement peut en outre comprendre des glissières 10 sur lesquelles peut coulisser le siège 1, ces glissières 10 pouvant être fixées au plancher du véhicule.

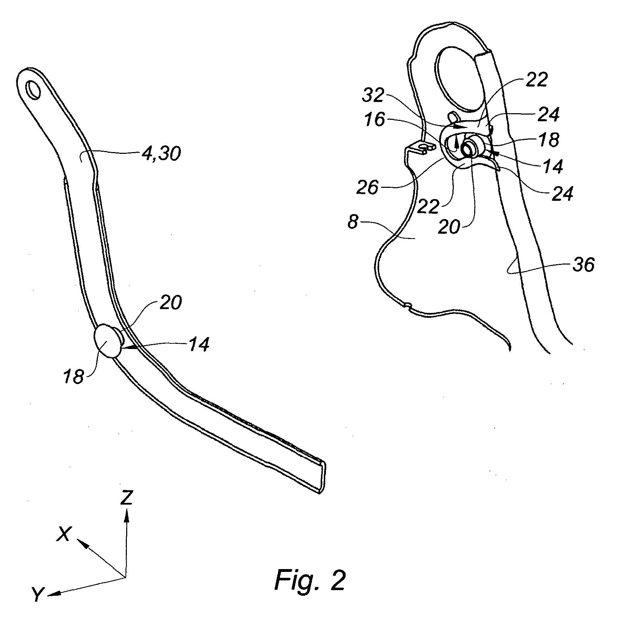

Selon l'exemple des figures 1 à 3, le siège 1 comprend en outre deux bielles 12 avant reliées à l'assise 4 par une troisième liaison pivot P3, d'axe transversal, et à l'ensemble 6 de soubassement par une quatrième liaison pivot P4, d'axe transversal.

Ainsi, le siège 1 est mobile entre une position nominale, visible sur la figure 1, dans laquelle le dossier 2 et l'assise 4 sont destinés à recevoir un passager et une position escamotée dans laquelle le dossier 2 est rabattu contre l'assise 4 pour dégager un espace de chargement. Dans la position nominale, le dossier 2 et l'assise 4 peuvent être sensiblement perpendiculaires, tandis qu'en position escamotée le dossier 2 et l'assise 4 peuvent être sensiblement horizontaux.

On notera que le siège 1 peut comprendre plusieurs positions nominales possibles, qui correspondent chacune à un réglage possible de l'inclinaison du dossier 2 relativement à l'assise 4 pour le confort d'un passager. Aussi, par position nominale il faut entendre l'une quelconque des positions nominales possibles dans la plage de réglage du confort offerte par le siège 1.

Le siège 1 comprend en outre des moyens de contreventement destinés à s'opposer au déversement des deux flasques 8 latéraux.

Ces moyens de contreventement sont destinés à établir une liaison rigide entre les deux flasques 8.

Les moyens de contreventement peuvent être actifs uniquement lorsque le siège 1 est dans la position nominale.

Selon le mode de réalisation des figures 1 à 3, les moyens de contreventement comprennent deux paires de surfaces 14, 16 fonctionnelles de blocage, chaque paire comprenant une première surface 14 fonctionnelle s'étendant depuis un élément d'assise 4 et une deuxième surface 16 fonctionnelle s'étendant depuis un élément de flasque 8 latéral de l'ensemble de soubassement, la première surface 14 fonctionnelle et la deuxième surface 16 fonctionnelle étant agencées relativement l'une par rapport à l'autre pour se superposer transversalement lorsque le siège 1 est dans la position nominale.

Ainsi, les surfaces 14, 16 fonctionnelles de blocage sont aptes à transmettre, par appui l'une contre l'autre, des efforts selon la direction transversale Y, d'un flasque 8 à l'autre, par l'intermédiaire de l'assise 4.

Selon l'exemple des figures 1 à 3, pour chaque paire de surfaces 14, 16 fonctionnelles, la première surface 14 fonctionnelle est délimitée par un retour 18 formé à une extrémité distale d'un axe 20, tandis que la deuxième surface 16 fonctionnelle est formée sur deux bras 22 de guidage longitudinaux sensiblement parallèles.

L'axe 20 est destiné à coulisser entre les deux bras 22 de guidage, le retour 18 étant destiné à prendre appui contre ces bras 22 de guidage lorsque le siège 1 est position nominale.

Les bras 22 de guidage s'étendent parallèlement à la trajectoire décrite par l'axe 20 relié à l'assise 4 lorsque le siège 1 est déplacé de la position nominale à la position escamotée.

Ainsi, l'axe 20 correspond à l'élément d'assise 4 tandis que les bras 22 de guidage correspondent à l'élément de flasque 8.

La longueur des bras 22 de guidage est telle que les surfaces 14, 16 fonctionnelles de blocage restent superposées, autrement dit le retour 18 reste en appui contre les bras 22 de guidage, quelque soit la position nominale du siège 1 parmi la pluralité de positions nominales possibles, c'est-à-dire quelque soit le réglage de l'inclinaison du dossier 2 choisi par le passager.

Les deux bras 22 de guidage appuient simultanément contre le retour 18 de l'axe 20 pour une meilleure répartition des efforts.

Les bras 22 de guidage présentent chacun une extrémité 24 libre, les deux extrémités 24 libres délimitant entre elles un passage pour l'insertion de l'axe 20 entre les bras 22 de guidage lorsque le siège 1 est déplacé de la position escamotée vers la position nominale.

Les bras 22 de guidage peuvent être reliés par une portion 26 centrale, opposée à l'ouverture délimitée par les extrémités 24 libres.

Ainsi, les bras 22 de guidage et la portion 26 centrale forment une pièce sensiblement en forme de U.

Les bras 22 de guidage peuvent s'étendre de façon sensiblement parallèle au flasque 8 auquel ils sont rattachés.

Le retour 18 peut présenter une forme de disque sensiblement perpendiculaire à l'axe 20.

L'axe 20 peut être sensiblement cylindrique.

Les extrémités 24 libres peuvent être arrondies pour faciliter le guidage de l'axe 20 vers l'intérieur de l'espace délimité entre les bras 22 de guidage lorsque le siège 1 est déplacé de la position escamotée vers la position nominale.

L'axe 20 peut être monté pivotant par rapport à l'assise 4, si bien qu'il peut tourner sur lui-même pour limiter les frottements avec les bras 22, ou bien être solidaire de l'assise 4 pour limiter les jeux de fonctionnement.

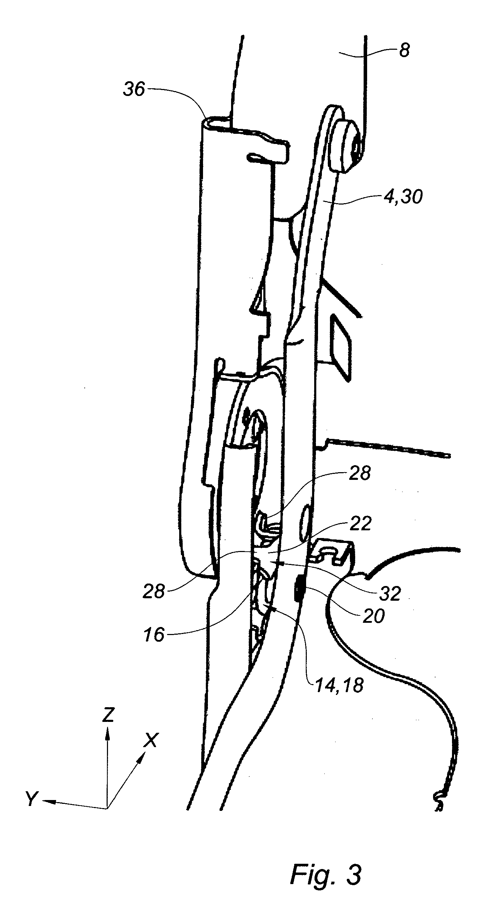

Comme cela est visible sur la figure 3, le siège 1 peut comprendre une pluralité de pattes 28 de fixation pour fixer les bras 22 de guidage au flasque 8 correspondant.

Les pattes 28 de fixation sont avantageusement agencées les unes par rapport aux autres de manière à former un polygone au centre duquel est destiné à se situer le retour 18 de l'axe 20 lorsque le siège 1 est dans la position nominale.

Les pattes 28 de fixation permettent aussi de décaler transversalement les bras 22 de guidage par rapport au flasque 8 auquel elles les relient.

Ainsi, le retour 18 est agencé entre le flasque 8 correspondant et les bras 22 de guidage lorsque le siège 1 est dans la position nominale, ce qui offre une configuration compact et non agressive.

Comme on peut le voir sur les figures 1 à 3, l'assise 4 comprend deux bras 30 latéraux sensiblement parallèles.

Les bras 22 de guidage peuvent comprendre une surface 32 fonctionnelle d'appui opposée à la deuxième surface 16 fonctionnelle et destinée à venir en appui contre l'un des deux bras 30 latéraux lorsque le siège 1 est dans la position nominale.

Les moyens de contreventement peuvent comprendre un tube 34 de liaison s'étendant de façon sensiblement transversale entre les deux bras 30 latéraux.

Le tube 34 de liaison s'étend avantageusement sensiblement entre les deux paires de surfaces 14, 16 fonctionnelles de blocage, à hauteur de celles-ci.

Comme cela est visible sur les figures 1 à 3, l'un au moins des deux flasques 8 de l'ensemble de soubassement comprend un rebord 36 courbé.

Ce rebord 36 est avantageusement courbé vers l'intérieur, c'est-à-dire vers le centre du siège 1, l'assise 4, pour éviter toute interaction avec l'environnement extérieur du siège 1.

Comme cela est visible sur la figure 1, chaque flasque 8 peut comprendre deux points 38a, 38b de fixation au plancher d'un véhicule ou à une glissière 10 de l'ensemble 6 de soubassement, et pour chaque flasque 8, l'élément de flasque sur lequel est ménagé la deuxième surface 16 fonctionnelle de blocage, correspondant ici aux bras 22 de guidage, est agencé à l'intérieur d'un triangle formé par les deux points 38a, 38b de fixation et deuxième liaison pivot P2 reliant chaque flasque 8 au dossier 2.

En particulier, cet élément de flasque peut être avantageusement plus proche de la deuxième liaison pivot P2 que des deux points 38a, 38b de fixation.

L'invention a également pour objet un véhicule, notamment un véhicule automobile, comprenant le siège 1 escamotable précédemment décrit.

En particulier, le siège 1 de ce véhicule peut correspondre à un siège de rang 2.

## Revendications

1. Siège (1) escamotable pour véhicule, notamment véhicule automobile, comprenant un dossier (2), une assise (4) articulée par rapport au dossier (2) par l'intermédiaire d'une première liaison pivot (P1), un ensemble (6) de soubassement pouvant être fixé au plancher d'un véhicule, l'ensemble (6) de soubassement comprenant deux flasques (8) latéraux reliés au dossier (2) par une deuxième liaison pivot (P2), et au moins une bielle (12) avant reliée à l'assise (4) par une troisième liaison pivot (P3) et à l'ensemble (6) de soubassement par une quatrième liaison pivot (P4), en vue de déplacer le siège (1) entre une position nominale dans laquelle le dossier (2) et l'assise (4) sont destinés à recevoir un passager et une position escamotée dans laquelle le dossier (2) est rabattu contre l'assise (4) pour dégager un espace de chargement, le siège (1) comprenant en outre des moyens de contreventement destinés à s'opposer au déversement des deux flasques (8) latéraux de l'ensemble (6) de soubassement lorsque le siège (1) est dans la position nominale, les moyens de contreventement comprenant deux paires de surfaces (14, 16) fonctionnelles de blocage, chaque paire comprenant une première surface (14) fonctionnelle de blocage s'étendant depuis un élément d'assise et une deuxième surface (16) fonctionnelle de blocage s'étendant depuis un élément de flasque latéral de l'ensemble (6) de soubassement, la première surface (14) fonctionnelle et la deuxième surface (16) fonctionnelle étant agencées relativement l'une par rapport à l'autre pour se superposer lorsque le siège (1) est dans la position nominale.

2. Siège (1) selon la revendication 1, **caractérisé en ce que** l'une des surfaces (14, 16) fonctionnelles, parmi la première surface (14) fonctionnelle et la deuxième surface (16) fonctionnelle, est délimitée par un retour (18) formé à une extrémité distale d'un axe (20), l'autre des surfaces (14, 16) fonctionnelles, parmi la première surface (14) fonctionnelle et la deuxième surface (16) fonctionnelle, étant formée sur deux bras (22) de guidage longitudinaux sensiblement parallèles entre lesquels est destiné à coulisser l'axe (20) et contre lesquels est destiné à prendre appui le retour (18) lorsque le siège (1) est position nominale, les bras (22) de guidage s'étendant parallèlement à la trajectoire décrite par l'axe lorsque le siège (1) est déplacé de la position nominale à la position escamotée.

3. Siège (1) selon la revendication 2, **caractérisé en ce que** le siège (1) comprend une pluralité de pattes (28) de fixation pour fixer les bras (22) de guidage au flasque (8) correspondant, ou le cas échéant à l'assise, les pattes (28) de fixation étant agencées les unes par rapport aux autres de manière à former un polygone au centre duquel est destiné à être agencé le retour (18) de l'axe lorsque le siège (1) est dans la position nominale.

4. Siège (1) selon la revendication 2 ou 3, **caractérisé en ce que** la première surface (14) fonctionnelle est délimitée par le retour (18) de l'axe (20) et **en ce que** la deuxième surface (16) fonctionnelle est formée par les deux bras (22) de guidage.

5. Siège (1) selon la revendication 4, **caractérisée en ce que** les bras (22) de guidage sont décalés transversalement par rapport au flasque (8) auquel ils sont rattachés, de sorte que le retour de l'axe (20) est agencé entre le flasque (8) et les bras (22) de guidage lorsque le siège (1) est dans la position nominale.

6. Siège (1) selon la revendication 4 ou 5, **caractérisé en ce que** l'assise (4) comprend deux bras (30) latéraux sensiblement parallèles, les bras (22) de guidage comprennent une surface (32) fonctionnelle d'appui opposée à la deuxième surface (16) fonctionnelle et destinée à venir en appui contre l'un des deux bras (30) latéraux lorsque le siège (1) est dans la position nominale.

7. Siège (1) selon l'une des revendications 1 à 6, **caractérisé en ce que** l'assise (4) comprend deux bras (30) latéraux sensiblement parallèles, et les moyens de contreventement comprennent un tube (34) de liaison s'étendant de façon sensiblement transversale entre les deux bras (30) latéraux.

8. Siège (1) selon l'une des revendications 1 à 7, **caractérisé en ce que** l'un au moins des deux flasques (8) de l'ensemble de soubassement comprend un rebord (36) courbé.

9. Véhicule, notamment véhicule automobile, comprenant un siège (1) escamotable selon l'une des revendications 1 à 8.

## Patentansprüche

1. Klappsitz (1) für ein Fahrzeug, vor allem ein Kraftfahrzeug, eine Rückenlehne (2) und eine Sitzfläche (4) umfassend, die über eine erste Schwenkverbindung (P1) gelenkig mit der Rückenlehne (2) verbunden ist, wobei eine Sockeleinheit (6) am Boden eines Fahrzeugs befestigt werden kann, und die Sockeleinheit (6) zwei seitliche Flansche (8) umfasst, die über eine zweite Schwenkverbindung (P2) mit der Rückenlehne (2) verbunden sind, und zumindest ein vorderes Gestänge (12), das über eine dritte Schwenkverbindung (P3) mit der Sitzfläche (4), und über eine vierte Schwenkverbindung (P4) mit der Sockeleinheit (6) verbunden ist, um den Sitz (1) zwischen einer nominalen Position, in der die Rückenlehne (2) und die Sitzfläche (4) dazu bestimmt sind, einen Passagier aufzunehmen und einer Klappposition zu bewegen, in der die Rückenlehne (2) gegen die Sitzfläche (4) geklappt ist, um einen Laderaum zu schaffen, wobei der Sitz (1) darüber hinaus Querverbindungsmittel umfasst, die dazu bestimmt sind, einer Neigung der beiden seitlichen Flansche (8) der Sockeleinheit (6) entgegenzuwirken, wenn sich der Sitz (1) in der nominalen Position befindet, wobei die Querverbindungsmittel zwei funktionale Flächenpaare (14, 16) zum Blockieren umfasst, wobei jedes Paar eine erste funktionale Blockierfläche (14) umfasst, die sich aus einem Sitzflächenelement erstreckt, und eine zweite funktionale Blockierfläche (16), die sich aus einem seitlichen Flansch der Sockeleinheit (6) erstreckt, wobei die erste funktionale Fläche (14) und die zweite funktionale Fläche (16) so zueinander angeordnet sind, um sich übereinander zu legen, wenn sich der Sitz (1) in der nominalen Position befindet.

2. Sitz (1) nach Anspruch 1, **dadurch gekennzeichnet, dass** eine der funktionalen Flächen (14, 16) der ersten funktionalen Fläche (14) und der zweiten funktionalen Fläche (16) durch eine Rückführung (18) begrenzt wird, die an einem distalen Ende einer Achse (20) gebildet wird, wobei die andere der funktionalen Flächen (14, 16) der ersten funktionalen Fläche (14) und der zweiten funktionalen Fläche (16) auf zwei längs verlaufenden und in etwa parallelen Führungsarmen (22) gebildet wird, zwischen denen die Achse (20) gleiten soll und an denen die Rückführung (18) anliegen soll, wenn sich der Sitz (1) in der nominalen Position befindet, wobei sich der Führungsarm (22) parallel zur Bahn erstreckt, die von der Achse beschrieben wird, wenn der Sitz (1) von der nominalen in die Klappposition bewegt wird.

3. Sitz (1) nach Anspruch 2, **dadurch gekennzeichnet, dass** der Sitz (1) eine Vielzahl von Befestigungslaschen (28) umfasst, um die Führungsarme (22) am entsprechenden Flansch (8), oder im jeweiligen Fall an der Sitzfläche zu befestigen, wobei die Befestigungslaschen (28) so zueinander angeordnet sind, um ein Polygon zu bilden, in dessen Mitte die Rückführung (18) der Achse angeordnet sein soll, wenn sich der Sitz (1) in der nominalen Position befindet.

4. Sitz (1) nach Anspruch 2 oder 3, **dadurch gekennzeichnet, dass** die erste funktionale Fläche (14) durch die Rückführung (18) der Achse (20) begrenzt wird, und dadurch, dass die zweite funktionale Fläche (16) durch die beiden Führungsarme (22) gebildet wird.

5. Sitz (1) nach Anspruch 4, **dadurch gekennzeichnet, dass** die Führungsarme (22) im Verhältnis zum Flansch (8), mit dem sie verbunden sind, quer versetzt sind, sodass die Rückführung der Achse (20) zwischen dem Flansch (8) und den Führungsarmen (22) angeordnet ist, wenn sich der Sitz (1) in der nominalen Position befindet.

6. Sitz (1) nach Anspruch 4 oder 5, **dadurch gekennzeichnet, dass** die Sitzfläche (4) zwei in etwa parallele seitliche Arme (30) umfasst, wobei die Führungsarme (22) eine funktionale Auflagefläche (32) gegenüber der zweiten funktionalen Fläche (16) umfassen, die dazu bestimmt ist, sich an einem der beiden seitlichen Arme (30) anzulegen, wenn sich der Sitz (1) in der nominalen Position befindet.

7. Sitz (1) nach einem der Ansprüche 1 bis 6, **dadurch gekennzeichnet, dass** die Sitzfläche (4) zwei in etwa parallele seitliche Arme (30) umfasst, und Querverbindungsmittel, ein Verbindungsrohr (34) umfassend, die sich in etwa quer zwischen den beiden seitlichen Armen (30) erstrecken.

8. Sitz (1) nach einem der Ansprüche 1 bis 7, **dadurch gekennzeichnet, dass** zumindest einer der beiden Flansche (8) der Sockeleinheit eine gekrümmte Kante (36) umfasst.

9. Fahrzeug, vor allem ein Kraftfahrzeug, einen Klappsitz (1) nach einem der Ansprüche 1 bis 8 umfassend.

## Claims

1. A retractable seat (1) for a vehicle, in particular a motor vehicle, comprising a backrest (2), a seat base (4) articulated with respect to the backrest (2) by means of a first pivot connection (P1), an underframe assembly (6) able to be secured to the floor pan of a vehicle, the underframe assembly (6) comprising two lateral flanges (8) connected to the backrest (2) by a second pivot connection (P2), and at least one front connecting rod (12) connected to the seat base (4) by a third pivot connection (P3) and to the underframe assembly (6) by a fourth pivot connection (P4), with a view to displacing the seat (1) between a nominal position in which the backrest (2) and the seat base (4) are intended to receive a passenger and a retractable position in which the backrest (2) is folded against the seat base (4) for clearing a loading space, the seat (1) further comprising brace means intended to oppose to the buckling of the two lateral flanges (8) of the underframe assembly (6) when the seat (1) is in the nominal position, the brace means comprising two pairs of functional blocking surfaces (14,16), each pair comprising a first functional blocking surface (14) extending from a seat base element and a second functional blocking surface (16) extending from a lateral flange element of the underframe assembly (6), the first functional surface (14) and the second functional surface (16) being arranged relatively with respect to each other to be superposed when the seat (1) is in the nominal position.

2. The seat (1) according to claim 1, **characterized in that** one of the functional surfaces (14, 16), from among the first functional surface (14) and the second functional surface (16), is delimited by a fold-back (18) formed at a distal end of an axis (20), the other of the functional surfaces (14, 16), from among the first functional surface (14) and the second functional surface (16), being formed on two longitudinal guiding arms (22) substantially parallel, between which the axis (20) is intended to slide and against which the fold-back (18) is intended to bear when the seat (1) is in nominal position, the guiding arms (22) extending in parallel to the trajectory described by the axis when the seat (1) is displaced from the nominal position to the retracted position.

3. The seat (1) according to claim 2, **characterized in that** the seat (1) comprises a plurality of securing lugs (28) for securing the guiding arms (22) to the corresponding flange (8), or optionally to the seat base, the securing lugs (28) being arranged with respect to each other so as to form a polygon in the center of which the fold-back (18) of the axis is intended to be arranged when the seat (1) is in the nominal position.

4. The seat (1) according to claim 2 or 3, **characterized in that** the first functional surface (14) is delimited by the fold-back (18) of the axis (20) and **in that** the second functional surface (16) is formed by the two guiding arms (22).

5. The seat (1) according to claim 4, **characterized in that** the guiding arms (22) are transversally shifted with respect to the flange (8) to which they are fastened, so that the fold-back of the axis (20) is arranged between the flange (8) and the guiding arms (22) when the seat (1) is in the nominal position.

6. The seat (1) according to claim 4 or 5, **characterized in that** the seat base (4) comprises two substantially parallel lateral arms (30), the guiding arms (22) comprise a functional bearing surface (32) opposite the second functional surface (16) and intended to bear against one of the two lateral arms (30) when the seat (1) is in the nominal position.

7. The seat (1) according to any of claims 1 to 6, **characterized in that** the seat base (4) comprises two substantially parallel lateral arms (30), and the brace means comprise a connecting tube (34) extending substantially transversally between the two lateral arms (30).

8. The seat (1) according to any of claims 1 to 7, **characterized in that** one at least of the two flanges (8) of the underframe assembly comprises a curved edge (36).

9. A vehicle, in particular a motor vehicle, comprising a retractable seat (1) according to any of claims 1 to 8.
